# EUROPÄISCHE PATENTSCHRIFT

(11) **EP 4 369 000 B1**
(45) Veröffentlichungstag und Bekanntmachung des Hinweises auf die Patenterteilung: **20.05.2026**
(21) Anmeldenummer: 23204425.5
(22) Anmeldetag: 18.10.2023
(51) Int. Cl.: G01N 35/04, B25J 15/00

(54) **VORRICHTUNG ZUR VAKUUMFREIEN ENTNAHME EINES NESTS AUS EINEM TUB, EIN SYSTEM UND EIN VERFAHREN ZUR VAKUUMFREIEN ENTNAHME EINES NESTS AUS EINEM TUB**
DEVICE FOR VACUUM-FREE REMOVAL OF A NEST FROM A TUB, A SYSTEM AND A METHOD FOR VACUUM-FREE REMOVAL OF A NEST FROM A TUB
DISPOSITIF POUR RETIRER SANS VIDE UN NID D'UN POT, SYSTÈME ET PROCÉDÉ POUR RETIRER SANS VIDE UN NID D'UN POT

(30) Priorität: 08.11.2022 DE 102022129528
(43) Veröffentlichungstag der Anmeldung: 15.05.2024
(73) Patentinhaber: Syntegon Technology GmbH, 70372 Stuttgart (DE)
(72) Erfinder: Ilgenfritz, Markus, 91555 Feuchtwangen (DE); Krauß, Ulrich, 74532 Ilshofen (DE); Nagler, Stefan, 73485 Unterschneidheim (DE); Stegmeier, Samuel, 74594 Kreßberg (DE)
(74) Vertreter: Novagraaf Group

(56) Entgegenhaltungen:
- DE-A1- 102020 126 552
- US-A1- 2005 151 385
- US-A1- 2018 282 069
- US-A1- 2021 403 252

## Beschreibung

Die vorliegende Erfindung betrifft eine Vorrichtung zur vakuumfreien Entnahme eines Nests aus einem Tub. Außerdem betrifft die vorliegende Erfindung ein System umfassend eine entsprechende Vorrichtung. Weiterhin betrifft die vorliegende Erfindung eine Sterilkammer, die eine entsprechende Vorrichtung oder ein entsprechendes System umfasst.

Ferner betrifft die vorliegende Erfindung ein Verfahren zur vakuumfreien Entnahme eines Nests aus einem Tub.

Ein Nest im vorliegenden Sinne ist eine Kunststoffträgerplatte und dient typischerweise dazu, Primärpackmittel wie beispielsweise Vials, Spritzen oder Karpulen, insbesondere für medizinische Wirkstoffe, oder sonstige Laborbedarfsteile wie beispielsweise Kolbenstoffen für Spritzen zu halten. Hierzu sind in einem Nest in der Regel mehrere Ausnehmungen oder Durchbrüche ausgebildet. Ein Nest wird typischerweise in einer Kunststoffwanne gehandhabt, die als Tub bezeichnet wird. Je nach Art des Nests kann in einem Tub nur ein einziges Nest aufgenommen sein oder es sind mehrere Nester in dem Tub übereinandergestapelt aufgenommen.

Typischerweise werden Tub und Nest bzw. Nester in einer sterilen Umgebung automatisiert gehandhabt. Das Entnehmen eines Nests aus einem Tub stellt einen anspruchsvollen Handhabungsschritt dar, weil das Nest abgesenkt in dem Tub angeordnet ist. Ein Greifer müsste also in das Tub hineingreifen, um das Nest zu entnehmen. Eine Vorrichtung zur Entnahme eines Nests aus einem Tub wird in Anbetracht ihrer Funktion auch als Nestausheber bezeichnet.

Herkömmlicherweise wird ein Nest mittels einer vakuumbasierten Vorrichtung aus dem Tub entnommen. Eine solche vakuumbasierte Vorrichtung saugt das Nest bei der Entnahme mit Hilfe von Vakuum an. Hierzu umfasst die Vorrichtung einen Saugrahmen mit darin ausgebildeten Vakuumkanälen. An dem Saugrahmen sind mehrere Distanzhülsen mit Saugern angebracht. Die Sauger saugen sich auf einer Ansaugfläche des Nests fest und bringen so die erforderliche Haltekraft auf, damit das angesaugte Nest dann aus dem Tub entnommen werden kann. Vakuumbasierte Vorrichtungen haben jedoch mehrere Nachteile, welche insbesondere bei der Verarbeitung von toxischen/hochpotenten Wirkstoffen Probleme bereiten. Nach dem Aufrüsten der Vorrichtung muss generell durch einen speziellen Dekontaminationszyklus mit H2O2 gewährleistet werden, dass auch die Vakuumkanäle von H2O2 durchströmt und somit dekontaminiert werden. Da jede vakuumbasierte Vorrichtung mehrere Sauger (häufig zehn Stück) umfasst, ist es nur schwer sicherzustellen, dass durch alle Sauger eine ausreichende Menge H2O2 gelangt. Bei toxischen und/oder hochpotenten Wirkstoffen muss zudem ein Filter vorgesehen werden, welcher verhindert, dass die Wirkstoffe in Form von Aerosolen durch das Vakuum aus der sterilen Umgebung in den Außenbereich gelangen. Bei toxischen und/oder hochpotenten Wirkstoffen stellt außerdem das Abrüsten der Vorrichtung eine Herausforderung dar, weil die Vakuumleitungen bis zum Filter potentiell mit toxischem Füllgut belastet sind und beim Washdown mit Wasser kaum erreicht werden. Somit muss das ganze Bauteil entweder manuell durch den Bediener über Handschuheingriffe in einen dichten Beutel eingepackt und später separat gereinigt werden oder automatisiert zum Beispiel durch einen Roboter über einen RTP-Port mit angedocktem Behälter ausgeschleust werden. Vakuumbasierte Vorrichtungen haben außerdem den Nachteil, dass die Verwendung einer Unterdruckeinheit zur Erzeugung des Vakuums notwendig ist. Diese verbraucht Energie, wodurch die Betriebskosten gesteigert werden. Weiterhin führt die Verwendung einer vakuumbasierten Vorrichtung auch dann zu Problemen, wenn einer der Sauger die Ansaugfläche des Nests nicht oder nur teilweise kontaktiert. Durch den betroffenen Sauger wird dann Falschluft gezogen, wodurch die Haltekraft auch an den anderen Saugern verringert wird. Ein ähnlicher Effekt tritt bei vakuumbasierten Vorrichtungen auch dann auf, wenn das anzusaugende Nest im Bereich eines der Sauger ein Loch oder eine sonstige Unregelmäßigkeit aufweist.

Aus der Praxis sind auch Vorrichtungen zur vakuumfreien Entnahme eines Nests aus einem Tub bekannt. Die bekannten vakuumfreien Vorrichtungen weisen mehrere als Rasteinheiten ausgebildete Aufnahmeeinheiten auf, zwischen die das zu entnehmende Nest einrasten kann. Durch eine solche vakuumfreie Vorrichtung können zumindest einige der im Zusammenhang mit den vakuumbasierten Vorrichtungen erläuterten Nachteile überwunden werden. Es können jedoch nur solche Nester aus Tubs entnommen werden, die geeignete Aussparungen für die Rasteinheiten aufweisen. Gerade bei Nestern, die übereinandergestapelt in einem Tub angeordnet sind, sind derartige Aussparungen jedoch in der Regel nicht vorhanden. Zudem gestaltet sich die Trennung des eingerasteten Nests von der Vorrichtung als relativ komplex. Die automatisierte Trennung erfordert typischerweise einen teuren Sechsachsroboter mit entsprechenden Freiheitsgraden bei den Bewegungen. Ein Ausfädeln des eingerasteten Nests aus der Vorrichtung mittels eines kostengünstigeren Vierachsroboters ist deutlich erschwert, weil hierzu ein Neigen des Nests notwendig ist.

Die Offenlegungsschrift DE 10 2020 126 552 A1 offenbart eine Vorrichtung zur vakuumfreien Entnahme eines Nests aus einem Tub, wobei die Vorrichtung Vertikalfixiereinheiten und Aufnahmeeinheiten aufweist, zwischen denen das Nest einrasten kann. Das Nest wird dann durch eine Kombination von Untergriff und Klemmgriff zwischen den Vertikalfixiereinheiten und den Aufnahmeeinheiten gehalten.

Der Erfindung liegt die Aufgabe zugrunde, eine Möglichkeit bereitzustellen, ein Nest in einer sterilen Umgebung aus einem Tub zu entnehmen, wobei eine einfache Betreibbarkeit und insbesondere Reinigungsmöglichkeit der Vorrichtung einerseits und geringe konstruktive Anforderungen an das Nest andererseits gegeben sein sollen.

Diese Aufgabe wird erfindungsgemäß gelöst durch eine Vorrichtung nach Anspruch 1, ein System nach Anspruch 11, eine Sterilkammer nach Anspruch 13 und ein Verfahren nach Anspruch 14.

Die jeweiligen Unteransprüche und die Beschreibung geben vorteilhafte Varianten und Ausführungsformen an.

Erfindungsgemäß ist also eine Vorrichtung zur vakuumfreien Entnahme eines Nests aus einem Tub vorgesehen. Die Vorrichtung umfasst eine, insbesondere rahmenförmig ausgebildete, Tragstruktur.

Die Vorrichtung umfasst weiter wenigstens eine, insbesondere längliche, Aufnahmeeinheit. Die Aufnahmeeinheit kann beispielsweise stiftförmig oder stempelförmig ausgebildet sein. Die Aufnahmeeinheit ist an der Tragstruktur angeordnet und erstreckt sich von der Tragstruktur weg. Wie zuvor erwähnt, kann die Tragstruktur rahmenförmig ausgebildet sein. Die Aufnahmeeinheit ist dann vorzugsweise derart an der rahmenförmigen Tragstruktur angeordnet, dass sie sich senkrecht zu einer durch die rahmenförmige Tragstruktur definierten Ebene erstreckt. Zumindest bei der Entnahme des Nests aus dem Tub erstreckt sich die Aufnahmeeinheit typischerweise in vertikaler Richtung abwärts.

Es ist nun vorgesehen, dass an einer von der Tragstruktur abgewandten Stirnfläche der Aufnahmeeinheit wenigstens ein Haftelement angeordnet ist, und dass das Haftelement zum adhäsiven Erfassen des Nests haftstrukturiert ausgebildet ist.

Mit einem adhäsiven Erfassen ist ein Erfassen durch Adhäsionskräfte gemeint. Adhäsionskräfte sind molekulare Anziehungskräfte, die zwischen sich berührenden Oberflächen wirken. Um ausreichend hohe Adhäsionskräfte für die Entnahme des Nests aufbringen zu können, ist das Haftelement erfindungsgemäß haftstrukturiert ausgebildet. Insofern ist das Haftelement von solchen Haftelementen abzugrenzen, die zum adhäsiven Erfassen eine unstrukturierte Klebstoffschicht aufweisen. Haftstrukturierte Haftelemente als solche sind grundsätzlich bekannt. Die Adhäsionskräfte werden bei haftstrukturierten Haftelementen typischerweise zumindest im Wesentlichen durch Van-der-Waals-Kräfte gebildet. Das erfindungsgemäße haftstrukturierte Haftelement kann beispielsweise eine Mikrostruktur und/oder eine Mesostruktur aufweisen. Vorzugsweise ist das Haftelement aus einem Polymer gefertigt, besonders bevorzugt aus Silikon. Zur Entnahme des Nests können das haftstrukturierte Haftelement und eine Anhaftfläche des Nests aneinandergedrückt werden. Dies führt dazu, dass sich die besagten Adhäsionskräfte zwischen dem Haftelement und der Anhaftfläche des Nests ausbilden, sodass das Nest adhäsiv erfasst wird. Ist das Nest adhäsiv erfasst, kann das Nest durch die Vorrichtung aus dem Tub entnommen werden, wobei das Nest durch die Adhäsionskräfte an dem Haftelement adhäsiv gehalten wird.

Die erfindungsgemäße Vorrichtung kann einfach betrieben und gereinigt werden, was insbesondere aus der vakuumfreien Ausführung der Vorrichtung resultiert. Konkret können die einzelnen Komponenten der Vorrichtung so ausgeführt werden, dass sie problemlos mit üblichen pharmazeutischen Reinigungs- und Desinfektionsmitteln behandelt bzw. auch autoklaviert werden können. Gegenüber den zuvor beschriebenen vakuumfreien Vorrichtungen, bei denen als Rasteinheiten ausgebildete Aufnahmeeinheiten vorhanden sind, ergibt sich zudem der Vorteil, dass keine Aussparungen für die Rasteinheiten in dem Nest vorhanden sein müssen. Vielmehr können mittels der erfindungsgemäßen Vorrichtung beinah beliebig ausgebildete bzw. geformte Nester aus Tubs entnommen werden. Weiterhin kann ein entnommenes Nest auch einfach von dem Haftelement wieder abgelöst werden, insbesondere mittels eines kostengünstigen Vierachsroboters. Beispielsweise kann das Nest durch Überdrücken, durch eine Kippbewegung, durch eine Scherbewegung oder durch eine Drehbewegung von dem Haftelement abgelöst werden. Ein weiterer Vorteil ist, dass nach Ablösen des Nests keinerlei Rückstände an dem Nest verbleiben. Zudem werden auch keine Partikel generiert, die durch mechanische Reibung zwischen dem Nest und Bestandteilen der Vorrichtung entstehen könnten.

Gemäß einer bevorzugten Ausführungsform ist vorgesehen, dass das Haftelement eine Vielzahl von elastisch verformbaren Haftvorsprüngen umfasst. Durch die elastisch verformbaren Haftvorsprünge können leichte Unebenheiten des Nests oder des Haftelementes ausgeglichen werden, um eine große Kontaktfläche zwischen dem Haftelement und dem Nest zu realisieren. Im Hinblick auf die Form der Haftvorsprünge sind verschiedene Ausführungen möglich. Vorzugsweise sind die Haftvorsprünge säulenförmig ausgebildet. Ein säulenförmig ausgebildeter Haftvorsprung weist einen zumindest im Wesentlichen konstanten, insbesondere kreisförmigen, Querschnitt auf. Alternativ dazu sind die Haftvorsprünge vorzugsweise pilzförmig ausgebildet. bei einem pilzförmigen Haftvorsprung ist die Querschnittsfläche eines Kontaktabschnitts zur Kontaktierung der Anhaftfläche größer als die Querschnittsfläche eines den Kontaktabschnitt tragenden Tragabschnitts.

Vorzugsweise beträgt ein Durchmesser der Haftvorsprünge weniger als 1 mm. Derart klein dimensionierte Haftvorsprünge können Unebenheiten effektiv ausgleichen, sodass ein Haftelement erhalten wird, dass hohe Adhäsionskräfte ausbilden kann. Bevorzugt beträgt der Durchmesser der Haftvorsprünge weniger als 500 µm, besonders bevorzugt weniger als 200 µm.

Bevorzugt ist das Haftelement eine Haftfolie. Ein als Haftfolie ausgebildetes Haftelement hat den Vorteil, dass die Dimensionierung des Haftelementes einfach an die Dimensionierung der Stirnfläche der Aufnahmeeinheit und/oder die Dimensionierung der zur Kontaktierung verfügbaren Anhaftfläche des Nests angepasst werden kann. Beispielsweise wird die Haftfolie hierzu auf eine gewünschte Dimensionierung zugeschnitten. Zudem kann eine Haftfolie in ihrer Form auch an eine unebene, insbesondere gewölbte, Stirnfläche der Aufnahmeeinheit angepasst werden. Die Haftfolie weist eine erste Stirnfläche und eine von der ersten Stirnfläche abgewandte zweite Stirnfläche auf. Vorzugsweise ist die erste Stirnfläche haftstrukturiert ausgebildet und die zweite Stirnfläche ist durch eine Klebeverbindung an der Stirnfläche der Aufnahmeeinheit befestigt.

Erfindungsgemäß ist die Aufnahmeeinheit federelastisch entlang ihrer Längsmittelachse verkürzbar ausgebildet, insbesondere über einen Federmechanismus, der insbesondere eine Federwegbegrenzung umfasst. Hierdurch wird das Erfassen des Nests erleichtert. Dies folgt zum einen daraus, dass die Anforderungen an die Positioniergenauigkeit des Nests verringert werden. Ist die Aufnahmeeinheit federelastisch verkürzbar, so kann die Aufnahmeeinheit Ungenauigkeiten im Hinblick auf die Positionierung des Nests durch Einfedern ausgleichen. Außerdem ergibt sich der Vorteil, dass ein unerwünschtes Überdrücken der Haftstruktur des Haftelementes vermieden werden kann. Überdrücken beschreibt den Effekt, dass das Haftelement und das Nest derart stark aneinandergedrückt werden, dass die Haftvorsprünge des Haftelementes umknicken. Die Stirnflächen der Haftvorsprünge sind dann schräg zu der Anhaftfläche des Nests erstreckt, sodass höchstens verringerte Adhäsionskräfte wirken können. Dieser beim Überdrücken auftretende Effekt wird auch als "Eulerscher Knickfall" bezeichnet.

Vorzugsweise ist die Aufnahmeeinheit an der Tragstruktur lösbar befestigt, insbesondere durch zumindest ein Befestigungsmittel wie beispielsweise eine Befestigungsschraube. Dies hat den Vorteil, dass die Anordnung der Aufnahmeeinheit an der Tragstruktur sowie die Anzahl von an der Tragstruktur angeordneten Aufnahmeeinheiten leicht verändert werden können. Beispielsweise können die Anordnung und die Anzahl an die konstruktive Ausführung des zu entnehmenden Nests angepasst werden.

Vorzugsweise umfasst die Vorrichtung mehrere, insbesondere längliche, Aufnahmeeinheiten, die an der Tragstruktur verteilt angeordnet sind und sich in dieselbe Richtung von der Tragstruktur wegerstrecken, wobei an den von der Tragstruktur abgewandten Stirnflächen der Aufnahmeeinheiten jeweils wenigstens ein Haftelement angeordnet ist. Vorstehend und nachstehend mit Bezug auf die wenigstens eine Aufnahmeeinheit offenbarte Merkmale sind vorzugsweise auch in der weiteren Aufnahmeeinheit bzw. den weiteren Aufnahmeeinheiten verwirklicht. Das Vorhandensein mehrerer Aufnahmeeinheiten hat verschiedene Vorteile. Zum einen können die insgesamt wirkenden Adhäsionskräfte durch mehrere Aufnahmeeinheiten verglichen mit nur einer Aufnahmeeinheit gesteigert werden. Zudem kann das Nest an verschiedenen Stellen gleichzeitig adhäsiv erfasst werden, sodass die Adhäsionskräfte entlang der Anhaftfläche des Nests verteilt an der Anhaftfläche angreifen. Hierdurch kann ein unerwünschtes "Abkippen" des Nests vermieden werden. Vorzugsweise sind die Aufnahmeeinheiten gleichlang ausgebildet, sodass die Haftelemente der verschiedenen Aufnahmeeinheiten auf derselben Höhe angeordnet sind. Wie zuvor erwähnt, ist die Tragstruktur vorzugsweise rahmenförmig ausgebildet. Die mehreren Aufnahmeeinheiten sind dann bevorzugt in Umfangsrichtung der rahmenförmig ausgebildeten Tragstruktur verteilt angeordnet, insbesondere gleichmäßig verteilt. In einer besonders bevorzugten Ausführungsform ist die Tragstruktur rechteckrahmenförmig mit vier Schenkeln ausgebildet, wobei an jedem der Schenkel der rechteckrahmenförmig ausgebildeten Tragstruktur jeweils zwei Aufnahmeeinheiten angeordnet sind.

Vorzugsweise umfasst die Vorrichtung wenigstens eine, insbesondere stiftförmig ausgebildete, Zentriereinheit, die an der Tragstruktur angeordnet ist und sich von der Tragstruktur wegerstreckt, wobei ein von der Tragstruktur abgewandtes Ende der Zentriereinheit zur Positionierung des Nests relativ zu der Tragstruktur eine insbesondere schräg zu der Stirnfläche erstreckte Führungsfläche aufweist. Durch die wenigstens eine Zentriereinheit kann das Nest vor dem adhäsiven Erfassen exakt vorpositioniert werden. Dies ist beispielsweise dann wichtig, wenn das Nest nach der Entnahme aus dem Tub weitertransportiert werden oder in einer Station für die Weiterverarbeitung exakt positioniert werden soll. Vorzugsweise ragt die Führungsfläche über das an der Aufnahmeeinheit angeordnete Haftelement hinaus. Dadurch kann einfach erreicht werden, dass das Nest zunächst durch die Führungsfläche vorpositioniert wird. Erst anschließend gelangt das Haftelement an der Anhaftfläche zur Anlage. Vorzugsweise wirkt die Führungsfläche zur Positionierung des Nests mit einer Außenkontur des Nests, mit einer Aussparung des Nests oder mit einem Durchbruch des Nests zusammen.

Vorzugsweise umfasst die Vorrichtung eine Sensoreinheit, die ausgebildet ist, um ein durch das Haftelement adhäsiv erfasstes Nest zu erkennen. Mittels der Sensoreinheit kann eine erfolgreiche Entnahme des Nests festgestellt werden. Beispielsweise ist die Sensoreinheit als Strahlungssensor, insbesondere Kamerasensor oder Lasersensor, ausgebildet. Alternativ dazu ist die Sensoreinheit beispielsweise als Kraftsensor ausgebildet und derart in die Vorrichtung integriert, dass die Gewichtskraft des erfassten Nests auf den Kraftsensor wirkt. Eine als Kraftsensor ausgebildete Sensoreinheit hat den Vorteil, dass mittels der Sensoreinheit auch die Anpresskraft überwacht werden kann, mit welcher die Anhaftfläche des Nests und das Haftelement aneinandergedrückt werden. Dies ermöglicht es, ein unerwünschtes Überdrücken des Haftelementes beim Erfassen des Nests zu erkennen oder zu vermeiden.

Die Vorrichtung kann eine Handhabungseinrichtung umfassen, die ausgebildet ist, um das Tub mit dem darin befindlichen Nest an die Aufnahmeeinheit heranzubewegen und die Anhaftfläche des Nests an das Haftelement anzudrücken. Vorzugsweise ist die Handhabungseinrichtung ausgebildet, um das Tub zu greifen. Die Tragstruktur mit der daran angeordneten Aufnahmeeinheit ist bei dieser Ausführungsform der Vorrichtung vorzugsweise ortsfest. Hierdurch wird das Andrücken der Anhaftfläche an das Haftelement erleichtert. Beispielsweise ist die Tragstruktur an einem ortsfest angeordneten Ständer befestigt.

Die Vorrichtung kann alternativ eine Handhabungseinrichtung umfassen, die ausgebildet ist, um die Tragstruktur an das in dem Tub befindliche Nest heranzubewegen und das Haftelement an die Anhaftfläche des Nests anzudrücken. Diese Ausführungsform der Vorrichtung hat den Vorteil, dass eine Entnahme des Nests auch dann einfach durchführbar ist, wenn ein Greifen des Tubs erschwert ist, beispielsweise weil das Tub eine geringe Steifigkeit aufweist. Vorzugsweise ist die Handhabungseinrichtung ausgebildet, um die Tragstruktur zu greifen.

Die zu lösende Aufgabe wird auch durch ein System mit den Merkmalen des Anspruchs 11 gelöst. Das System umfasst eine Vorrichtung mit den oben beschriebenen Merkmalen, wenigstens ein Nest mit einer Anhaftfläche und wenigstens ein Tub zur Aufnahme des Nests.

Hinsichtlich der mit dem System erzielbaren Vorteile wird auf die diesbezüglichen Ausführungen zur Vorrichtung bzw. zum Verfahren verwiesen. Zur weiteren Ausgestaltung des Systems können die im Zusammenhang mit der Vorrichtung beziehungsweise dem Verfahren beschriebenen Merkmale dienen.

Gemäß einer bevorzugten Ausführungsform des Systems ist vorgesehen, dass die Vorrichtung mehrere, insbesondere längliche, Aufnahmeeinheiten umfasst, die derart an der Tragstruktur angeordnet sind, dass die an den Stirnflächen der Aufnahmeeinheiten angeordneten Haftelemente gleichzeitig die Anhaftfläche kontaktieren können. Hierdurch kann das Nest besonders sicher erfasst und entnommen werden. Dabei kann die Anhaftfläche eine zusammenhängende Fläche sein. Die Anhaftfläche kann sich jedoch auch aus mehreren voneinander getrennten Teilflächen zusammensetzen. Vorzugsweise wird die Anhaftfläche durch einen umlaufenden horizontal erstreckten Rand des Nests gebildet ist. Das Merkmal "horizontal erstreckt" bezieht sich dabei auf die Erstreckung des Rands während der Entnahme des Nests aus dem Tub.

Die zu lösende Aufgabe wird auch durch eine Sterilkammer mit den Merkmalen des Anspruchs 13 gelöst. In der Sterilkammer ist eine Vorrichtung mit den oben beschriebenen Merkmalen oder ein System mit den oben beschriebenen Merkmalen angeordnet.

Hinsichtlich der mit der Sterilkammer erzielbaren Vorteile wird auf die diesbezüglichen Ausführungen zur Vorrichtung bzw. zum Verfahren verwiesen. Zur weiteren Ausgestaltung der Sterilkammer können die im Zusammenhang mit der Vorrichtung bzw. dem Verfahren beschriebenen Maßnahmen dienen. Eine Sterilkammer im Sinne der Erfindung ist eine Einrichtung in der eine geschlossene oder überwiegende geschlossene kontrollierte Atmosphäre gegeben ist, bspw. ein Isolator oder eine zwar bereichsweise offene Einhausung die einen Innenbereich unter Überdruck aufweist, so dass eine kontrollierte Atmosphäre im inneren herrscht.

Die zu lösende Aufgabe wird auch durch ein Verfahren zur vakuumfreien Entnahme eines Nests aus einem Tub gelöst, wobei das Verfahren die folgenden Schritte umfasst:
Bereitstellen einer Vorrichtung, die wenigstens eine, insbesondere rahmenförmig ausgebildete, Tragstruktur und wenigstens eine, insbesondere längliche, Aufnahmeeinheit umfasst, die an der Tragstruktur angeordnet ist und sich von der Tragstruktur wegerstreckt. An einer von der Tragstruktur abgewandten Stirnfläche der Aufnahmeeinheit ist wenigstens ein Haftelement angeordnet, das zum adhäsiven Erfassen des Nests haftstrukturiert ausgebildet ist.

Aneinanderdrücken des Haftelements und einer Anhaftfläche des Nests, sodass die Anhaftfläche durch das Haftelement adhäsiv erfasst wird.

Entnehmen des Nests aus dem Tub und Ablösen des Nests von dem Haftelement.

Vorteile und Weiterbildungsmöglichkeiten der Vorrichtung sind als ebenso in Bezug auf das Verfahren beschrieben zu verstehen und umgekehrt sind Vorteile und Weiterbildungsmöglichkeiten des Verfahrens als ebenso in Bezug auf die Vorrichtung beschrieben zu verstehen.

Im Hinblick auf das Aneinanderdrücken des Haftelements und der Anhaftfläche des Nests sind verschiedene Ausführungsformen des Verfahrens möglich. Bei einer bevorzugten ersten Ausführungsform wird die Anhaftfläche gegen das ortsfeste Haftelement gedrückt. Bei einer bevorzugten zweiten Ausführungsform wird das Haftelement gegen die Anhaftfläche des ortsfesten Nests gedrückt. Bei einer dritten Ausführungsform werden das Haftelement und das Nest aufeinander zu bewegt, sodass weder das Haftelement noch das Nest ortsfest ist.

Vorzugsweise wird das Nest durch Überdrücken, durch eine Kippbewegung, durch eine Scherbewegung oder durch eine Drehbewegung von dem Haftelement abgelöst. Diese Vorgehensweisen sind einfach durchführbar, beispielsweise mittels eines kostengünstigen Vierachsroboters. Beim Überdrücken werden das Nest und/oder die Aufnahmeeinheit mit einer Kraft beaufschlagt, die der Adhäsionskraft entgegengerichtet ist. Bei ausreichend hoher Kraft führt dies dazu, dass die Haftstruktur, insbesondere die elastisch verformbaren Haftvorsprünge, derart verformt wird, dass die Adhäsionskraft gelöst wird. Eine Kippbewegung ist eine Drehung um eine Achse, die parallel zu der Anhaftfläche des Nests ausgerichtet ist. Eine Scherbewegung ist eine Verschiebung entlang einer Achse, die parallel zu der Anhaftfläche des Nests ausgerichtet ist. Eine Drehbewegung ist eine Drehung um eine Achse, die senkrecht zu der Anhaftfläche des Nests ausgerichtet ist.

Die Erfindung wird im Folgenden anhand der Figuren näher beschrieben, wobei gleiche oder funktional gleiche Elemente gegebenenfalls lediglich einmal mit Bezugszeichen versehen sind. Die Beschreibung dient als Beispiel und ist nicht einschränkend zu verstehen.
- Fig. 1: eine perspektivische Darstellung einer Vorrichtung zum Entnehmen eines Nests aus einem Tub;
- Fig. 2: eine Seitenansicht der Vorrichtung aus Fig. 1;
- Fig. 3: eine Detailansicht der Vorrichtung aus Fig. 1;
- Fig. 4: eine Schnittdarstellung der Vorrichtung bei der Entnahme des Nests und
- Fig. 5: eine Aufnahmeeinheit.

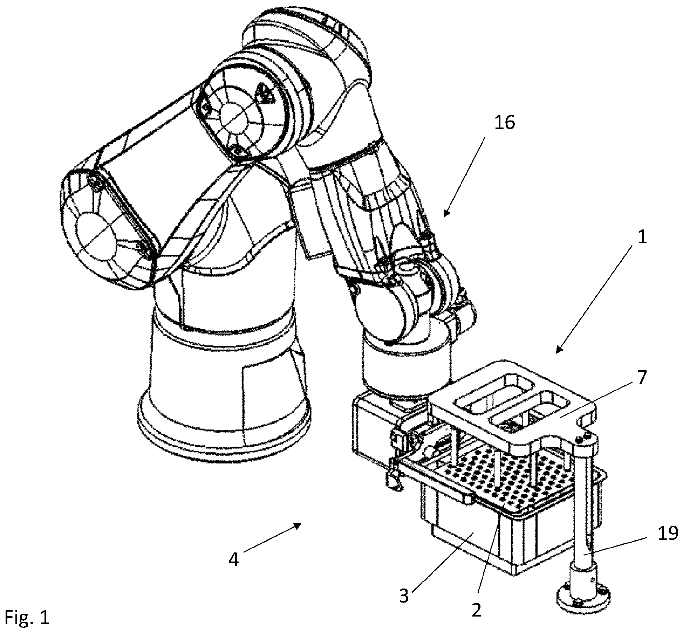

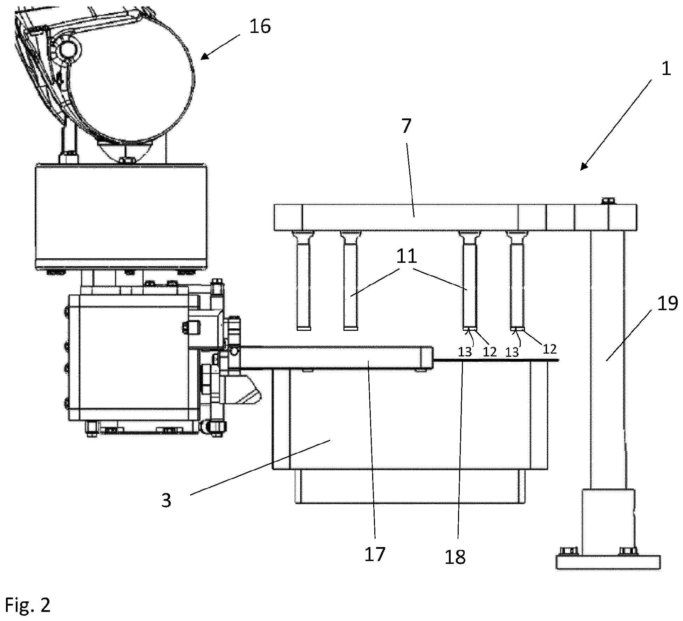

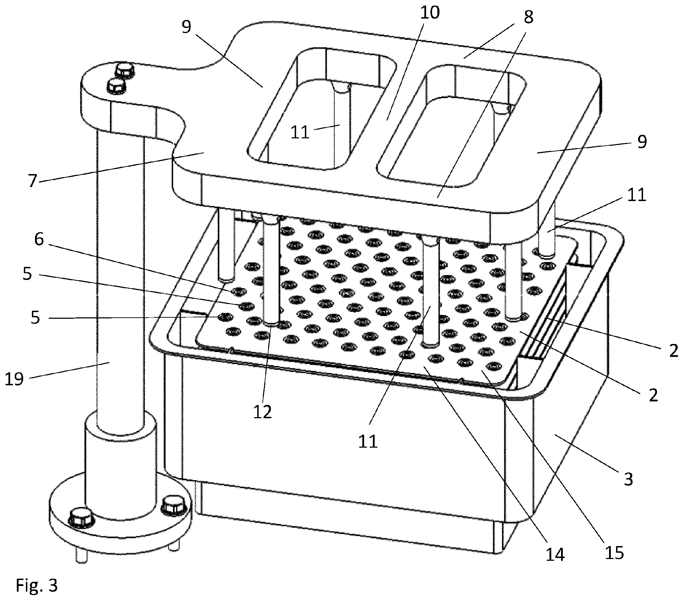

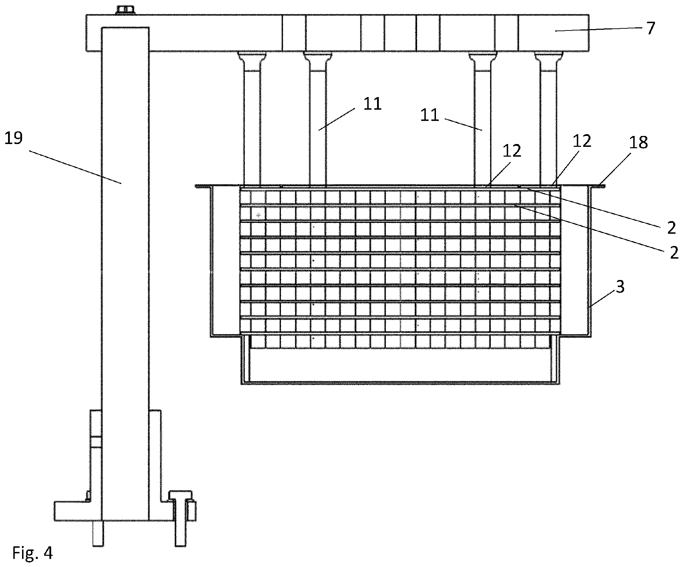

Die Figuren 1 bis 4 zeigen eine Vorrichtung 1 zur Entnahme eines Nests 2 aus einem Tub 3. Dabei zeigt Figur 1 eine perspektivische Darstellung der Vorrichtung 1. Figur 2 zeigt eine Seitenansicht der Vorrichtung 1. Figur 3 zeigt eine perspektivische Detailansicht der Vorrichtung 1. Figur 4 zeigt eine Schnittdarstellung der Vorrichtung 1 bei der Entnahme des Nests 2. Die Vorrichtung 1, das Nest 2 und das Tub 3 bilden gemeinsam ein System 4. Das System 4 mit der Vorrichtung 1 ist vorzugsweise in einer nicht näher dargestellten Sterilkammer angeordnet, sodass die Entnahme des Nests 2 aus dem Tub 3 durch die Vorrichtung 1 unter sterilen Bedingungen stattfindet.

Das Tub 3 ist wannenförmig ausgebildet und aus Kunststoff gefertigt. Bei dem in den Figuren 1 bis 4 dargestellten Ausführungsbeispiel sind in dem Tub 3 mehrere Nester 2 übereinandergestapelt aufgenommen. Alternativ dazu ist nur ein Nest 2 in dem Tub 3 aufgenommen, wobei das Nest 2 dann typischerweise eine größere Höhenerstreckung aufweist als die in den Figuren beispielhaft gezeigten Nester 2. Die Nester 2 sind plattenförmig ausgebildet und aus Kunststoff gefertigt. Typischerweise dienen solche Nester dazu, Primärpackmittel oder sonstige Laborbedarfsteile zu halten. Vorliegend sind in den Nestern 2 Kolbenstopfen 5 gehalten. Jeder der Kolbenstopfen 5 ist in einer jeweils anderen Ausnehmung 6 eines der Nester 2 angeordnet.

Die Vorrichtung 1 weist eine rahmenförmige Tragstruktur 7 auf. Vorliegend ist die Tragstruktur 7 rechteckrahmenförmig ausgebildet. Entsprechend weist die Tragstruktur 7 zwei parallel zueinander erstreckte erste Schenkel 8 und zwei parallel zueinander erstreckte zweite Schenkel 9 auf. Die zweiten Schenkel 9 sind senkrecht zu den ersten Schenkeln 8 erstreckt. Vorliegend ist die Längserstreckung der ersten Schenkel 8 größer als die Längserstreckung der zweiten Schenkel 9. Die ersten Schenkel 8 sind durch eine Stützstrebe 10 der Tragstruktur 7 miteinander verbunden.

An der Tragstruktur 7 sind mehrere längliche Aufnahmeeinheiten 11 angeordnet. Vorliegend sind die Aufnahmeeinheiten 11 stiftförmig ausgebildet. Die Aufnahmeeinheiten 11 erstrecken sich von der Tragstruktur 7 weg. Vorliegend sind die Aufnahmeeinheiten 11 derart an der Tragstruktur 7 angeordnet, dass sie sich senkrecht zu einer durch die rahmenförmige Tragstruktur 7 definierten Ebene erstrecken. Die Schenkel 8 und 9 der Tragstruktur 7 erstrecken sich in besagter Ebene. Bei dem in den Figuren 1 bis 4 dargestellten Ausführungsbeispiel sind insgesamt acht Aufnahmeeinheiten 11 vorhanden. Die Aufnahmeeinheiten 11 sind in Umfangsrichtung der rahmenförmigen Tragstruktur 7 an der Tragstruktur 7 verteilt angeordnet. An jedem der Schenkel 8, 9 sind jeweils zwei der Aufnahmeeinheiten 11 angeordnet. Es kann jedoch auch eine andere Zahl von Aufnahmeeinheiten 11 vorhanden sein. Gemäß einem weiteren Ausführungsbeispiel ist an jedem der Schenkel 8, 9 nur jeweils eine Aufnahmeeinheit 11 angeordnet. Gemäß noch einem weiteren Ausführungsbeispiel sind die ersten Schenkel 8 oder die zweiten Schenkel 9 frei von Aufnahmeeinheiten 11.

Jede der Aufnahmeeinheiten 11 weist jeweils wenigstens ein Haftelement 12 auf, das zum adhäsiven Erfassen eines Nests 2 haftstrukturiert ausgebildet ist. Die Haftelemente 12 sind an von der Tragstruktur 7 abgewandten Stirnflächen 13 der Aufnahmeeinheiten 11 angeordnet. Vorliegend sind die Haftelemente 12 derart dimensioniert, dass sie die jeweilige Stirnfläche 13 vollflächig bedecken. Alternativ dazu können an einer der Aufnahmeeinheiten 11 oder mehreren der Aufnahmeeinheiten 11 auch mehrere Haftelemente 12 angeordnet sein, welche auf der Stirnfläche 13 der betreffenden Aufnahmeeinheit 11 verteilt angeordnet sind. Vorliegend sind die Haftelemente 12 als Haftfolien 12 ausgebildet.

Die Haftstruktur der Haftelemente 12 wird vorzugsweise durch eine Vielzahl von elastisch verformbaren Haftvorsprüngen gebildet. Vorzugsweise beträgt ein Durchmesser der Haftvorsprünge weniger als 1 mm. Die Haftstruktur ist dann entsprechend als Mikrostruktur ausgebildet. Aufgrund ihrer Dimensionierung sind die Haftvorsprünge in den Figuren nicht erkenntlich. Beispielsweise sind die Haftvorsprünge stiftförmig oder pilzförmig ausgebildet.

Die Nester 2 weisen jeweils eine Anhaftfläche 14 auf. Die Anhaftfläche 14 ist komplementär zu den Haftelementen 12 ausgebildet, sodass die Haftelemente 12 gleichzeitig an der Anhaftfläche 14 anliegen können. Vorliegend wird die Anhaftfläche 14 durch einen umlaufenden Rand 15 der Nester 2 gebildet. Werden die Anhaftfläche 14 und die Haftelemente 12 aneinandergedrückt, so schmiegen sich die haftstrukturierten Haftelemente 12 an die Anhaftfläche 14 an. Im Falle der zuvor erwähnten Haftvorsprünge geschieht dies beispielsweise unter elastischer Verformung der Haftvorsprünge. Es bilden sich dann Adhäsionskräfte zwischen den Haftelementen 12 und der Anhaftfläche 14 aus, sodass das Nest 2 durch die Haftelemente 12 adhäsiv erfasst wird.

Die Vorrichtung 1 weist außerdem eine Handhabungseinrichtung 16 auf. Vorliegend ist die Handhabungseinrichtung 16 ein Sechsachsroboter 16. Alternativ dazu ist die Handhabungsvorrichtung 16 vorzugsweise ein Vierachsroboter.

Der im Zusammenhang mit den Figuren beschriebene Entnahmevorgang ist auch mittels einer als Vierachsroboter ausgebildeten Handhabungseinrichtung 16 durchführbar. Bei dem in den Figuren dargestellten Ausführungsbeispiel ist die Handhabungseinrichtung 16 ausgebildet, um das Tub 3 an die Aufnahmeeinheiten 11 heranzubewegen und die Anhaftfläche 14 des Nests 2 an die Haftelemente 12 anzudrücken. Hierzu weist die Handhabungseinrichtung 16 einen Greifer 17 auf. Der Greifer 17 ist ausgebildet, um eine Auskragung 18 des Tubs 3 zu greifen. Ist die Handhabungseinrichtung 16 ausgebildet, um das Tub 3 zu greifen, so ist die Tragstruktur 7 mit den Aufnahmeeinheiten 11 vorzugsweise ortsfest. Vorliegend ist die Tragstruktur 7 derart an einem ortsfesten Ständer 19 befestigt, dass sich die Aufnahmeeinheiten 11 vertikal nach unten erstrecken. Die rahmenförmige Tragstruktur 7 erstreckt sich entsprechend horizontal.

Soll ein Nest 2 durch die Vorrichtung 1 aus dem Tub 3 entnommen werden, so wird vorzugsweise wie folgt vorgegangen. Zunächst greift die Handhabungseinrichtung 16 mittels des Greifers 17 das Tub 3 mit den darin befindlichen Nestern 2. Die Handhabungseinrichtung 16 bewegt dann das Tub 3 vertikal von unten derart an die Aufnahmeeinheiten 11 heran, dass die Anhaftfläche 14 mit einer vorbestimmten ersten Anpresskraft an die Haftelemente 12 angedrückt wird. Die Anhaftfläche 14 ist dabei horizontal erstreckt. Durch das Andrücken der Anhaftfläche 14 an die Haftelemente 12 mit der ersten Anpresskraft wird das Nest 2 durch die Haftelemente 12 adhäsiv erfasst, wie zuvor erläutert. Anschließend bewegt die Handhabungseinrichtung 16 das Tub 3 vertikal nach unten. Das Nest 2 haftet an den Haftelementen 12 an und wird durch die Bewegung des Tubs 3 aus dem Tub 3 entnommen.

Anschließend wird das Nest 2 von den Haftelementen 12 abgelöst. Vorzugsweise wird dies durch die Handhabungseinrichtung 16 durchgeführt. Die Handhabungseinrichtung 16 stellt hierfür zunächst das Tub 3 ab. Anschließend greift die Handhabungseinrichtung 16 mittels des Greifers 17 das an den Haftelementen 12 anhaftende Nest 2 und löst das Nest 2 von den Haftelementen 12 ab. Das Nest 2 kann jedoch auch durch eine separate weitere Handhabungseinrichtung von den Haftelementen 12 abgelöst werden.

Im Hinblick auf das Ablösen des Nests 2 können verschiedene bevorzugte Vorgehensweisen angewandt werden, die im Folgenden erläutert werden.

Bei einem ersten Ausführungsbeispiel wird das Nest 2 durch Überdrücken von den Haftelementen 12 gelöst. Hierzu wird das Nest 2 mit einer vorbestimmten zweiten Anpresskraft vertikal nach oben an die Haftelemente 12 angedrückt. Die zweite Anpresskraft ist größer als die zuvor aufgewandte erste Anpresskraft. Das Andrücken mit der zweiten Anpresskraft führt dazu, dass die Haftstruktur des Haftelements 12 deformiert wird, wodurch die Adhäsionskräfte gelöst werden. Weist die Haftstruktur die zuvor erwähnten Haftvorsprünge auf, so werden die Haftvorsprünge durch das Andrücken mit der zweiten Anpresskraft geknickt. Die Stirnflächen der Haftvorsprünge sind dann schräg zu der Anhaftfläche 14 des Nests 2 erstreckt. Es wirken dann höchstens noch geringe Adhäsionskräfte zwischen den Haftelementen 12 und der Anhaftfläche 14.

Bei einem zweiten Ausführungsbeispiel wird das Nest 2 durch eine Kippbewegung von den Haftelementen 12 abgelöst. Hierzu wird das Nest 2 um eine Achse gedreht, die parallel zu dem plattenförmigen Nest 2 ausgerichtet ist.

Bei einem dritten Ausführungsbeispiel wird das Nest 2 durch eine Scherbewegung von den Haftelementen 12 abgelöst. Hierzu wird das Nest 2 entlang einer Achse verschoben, die parallel zu dem plattenförmigen Nest 2 ausgerichtet ist.

Bei einem vierten Ausführungsbeispiel wird das Nest 2 durch eine Drehbewegung von den Haftelementen 12 abgelöst. Hierzu wird das Nest 2 um eine Achse gedreht, die senkrecht zu dem plattenförmigen Nest 2 ausgerichtet ist.

Gemäß einem weiteren Ausführungsbeispiel der Vorrichtung 1 ist die Handhabungseinrichtung 16 ausgebildet, um die Tragstruktur 7 mit den daran angeordneten Aufnahmeeinheiten 11 an das Nest 2 heranzubewegen und die Haftelemente 12 an die Anhaftfläche 14 anzudrücken. Das Nest 2 wird dann durch die Haftelemente 12 adhäsiv erfasst, wie zuvor beschrieben. Anschließend wird das Nest 2 durch Bewegen der Tragstruktur 7 aus dem Tub 3 entnommen. Bei diesem Ausführungsbeispiel der Vorrichtung 1 ist zum Ablösen des entnommenen Nests 2 beispielsweise eine separate weitere Handhabungseinrichtung vorhanden. Alternativ dazu ordnet die Handhabungseinrichtung 16 die Tragstruktur 7 mitsamt dem adhäsiv erfassten Nest 2 zunächst ortsfest an und löst dann selbst das Nest 2 ab.

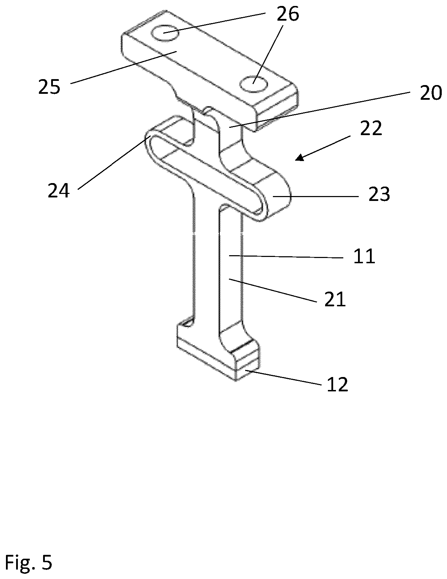

Figur 5 zeigt ein weiteres Ausführungsbeispiel der Aufnahmeeinheit 11. Die in Figur 5 dargestellte Aufnahmeeinheit 11 ist stempelförmig ausgebildet. Entsprechend weist die Aufnahmeeinheit 11 im Bereich der Stirnfläche 13 einen vergrößerten Querschnitt auf. Anstelle der in den Figuren 1 bis 4 dargestellten stiftförmigen Aufnahmeeinheiten 11 kann auch die in Figur 5 dargestellte stempelförmige Aufnahmeeinheit 11 in der Vorrichtung 1 eingesetzt werden.

Die in Figur 5 dargestellte Aufnahmeeinheit 11 ist federelastisch entlang ihrer Längsmittelachse verkürzbar ausgebildet. Hierzu weist die Aufnahmeeinheit 11 zwei Abschnitte 20, 21 auf, die durch einen Federmechanismus 22 miteinander verbunden sind. Der Federmechanismus 22 umfasst vorliegend zwei seitlich auskragende U-förmige Federelemente 23, 24. Die U-förmigen Federelemente 23, 24 sind durch Ausfräsen eines zentralen Teils der Aufnahmeeinheit 11 gebildet. Durch die seitlich auskragenden U-förmigen Federelemente 23, 24 sind die Abschnitte 20, 21 miteinander verbunden, wobei die Abschnitte 20, 21 in Längserstreckung der Aufnahmeeinheit 11 voneinander beabstandet sind. Die Abschnitte 20, 21 können unter Verformung der U-förmigen Federelemente 23, 24 aufeinander zu bewegt werden, wodurch die Längserstreckung der Aufnahmeeinheit 11 verkürzt wird. Der Federmechanismus 22 hat den Vorteil, dass ein unerwünschtes Überdrücken beim adhäsiven Erfassen eines Nests 2 vermieden wird. Der Federmechanismus 22 kann auch bei den in den Figuren 1 bis 4 dargestellten stiftförmigen Aufnahmeeinheiten 11 vorhanden sein.

Die in Figur 5 dargestellte Aufnahmeeinheit 11 weist einen Montageflansch 25 mit darin ausgebildeten Bohrungen 26 auf. Durch die Bohrungen 26 kann die Aufnahmeeinheit 11 an der Tragstruktur 7 lösbar befestigt werden. Dies hat den Vorteil, dass die Anzahl und Anordnung der Aufnahmeeinheiten 11 an die Form des zu entnehmenden Nests 2 angepasst werden kann. Auch die in den Figuren 1 bis 4 dargestellten Aufnahmeeinheiten 11 sind vorzugsweise lösbar an der Tragstruktur 7 befestigt.

## Patentansprüche

1. Vorrichtung (1) zur vakuumfreien Entnahme eines Nests (2) aus einem Tub (3), wobei die Vorrichtung (1) wenigstens eine, insbesondere rahmenförmig ausgebildete, Tragstruktur (7) und wenigstens eine, insbesondere längliche, Aufnahmeeinheit (11) umfasst, die an der Tragstruktur (7) angeordnet ist und sich von der Tragstruktur (7) wegerstreckt, **dadurch gekennzeichnet, dass** an einer von der Tragstruktur (7) abgewandten Stirnfläche (13) der Aufnahmeeinheit (11) wenigstens ein Haftelement (12) angeordnet ist, dass das Haftelement (12) zum adhäsiven Erfassen des Nests (2) haftstrukturiert ausgebildet ist, und dass die Aufnahmeeinheit (11) federelastisch entlang ihrer Längsmittelachse verkürzbar ausgebildet ist.

2. Vorrichtung (1) nach Anspruch 1, **dadurch gekennzeichnet, dass** das Haftelement (12) eine Vielzahl von elastisch verformbaren Haftvorsprüngen umfasst, insbesondere wobei ein Durchmesser der Haftvorsprünge weniger als 1 mm beträgt, bevorzugt weniger als 500 µm, besonders bevorzugt weniger als 200 µm.

3. Vorrichtung (1) nach einem der Ansprüche 1 und 2,
**dadurch gekennzeichnet, dass** das Haftelement (12) eine Haftfolie (12) ist.

4. Vorrichtung (1) nach einem der Ansprüche 1 bis 3,
**dadurch gekennzeichnet, dass** die Aufnahmeeinheit (11) über einen Federmechanismus (22) entlang ihrer Längsmittelachse federelastisch verkürzbar ausgebildet ist, insbesondere wobei der Federmechanismus (22) eine Federwegbegrenzung umfasst.

5. Vorrichtung (1) nach einem der Ansprüche 1 bis 4,
**dadurch gekennzeichnet, dass** die Aufnahmeeinheit (11) an der Tragstruktur (7) lösbar befestigt ist, insbesondere durch zumindest ein Befestigungsmittel.

6. Vorrichtung (1) nach einem der Ansprüche 1 bis 5,
**dadurch gekennzeichnet, dass** sie mehrere, insbesondere längliche, Aufnahmeeinheiten (11) umfasst, die an der Tragstruktur (7) verteilt angeordnet sind und sich in dieselbe Richtung von der Tragstruktur (7) wegerstrecken, wobei an den von der Tragstruktur (7) abgewandten Stirnflächen (13) der Aufnahmeeinheiten (11) jeweils wenigstens ein Haftelement (12) angeordnet ist, insbesondere wobei die Aufnahmeeinheiten (11) in Umfangsrichtung der rahmenförmig ausgebildeten Tragstruktur (7) insbesondere gleichmäßig verteilt angeordnet sind.

7. Vorrichtung (1) nach einem der Ansprüche 1 bis 6,
**dadurch gekennzeichnet, dass** sie wenigstens eine, insbesondere stiftförmig ausgebildete, Zentriereinheit umfasst, die an der Tragstruktur (7) angeordnet ist und sich von der Tragstruktur (7) wegerstreckt, wobei ein von der Tragstruktur (7) abgewandtes Ende der Zentriereinheit zur Positionierung des Nests (2) relativ zu der Tragstruktur (7) eine schräg zu der Stirnfläche (13) erstreckte Führungsfläche aufweist, insbesondere wobei die Führungsfläche zur Positionierung des Nests (2) mit einer Außenkontur des Nests (2), mit einer Aussparung des Nests (2) oder mit einem Durchbruch des Nests (2) zusammenwirkt.

8. Vorrichtung (1) nach einem der Ansprüche 1 bis 7,
**dadurch gekennzeichnet, dass** sie eine Sensoreinheit umfasst, die ausgebildet ist, um ein durch das Haftelement (12) adhäsiv erfasstes Nest (2) zu erkennen.

9. Vorrichtung (1) nach einem der Ansprüche 1 bis 8,
**dadurch gekennzeichnet, dass** sie eine Handhabungseinrichtung (16) umfasst, die ausgebildet ist, um das Tub (3) mit dem darin befindlichen Nest (2) an die Aufnahmeeinheit (12) heranzubewegen und eine Anhaftfläche (14) des Nests (2) an das Haftelement (12) anzudrücken.

10. Vorrichtung (1) nach einem der Ansprüche 1 bis 8,
**dadurch gekennzeichnet, dass** sie eine Handhabungseinrichtung (16) umfasst, die ausgebildet ist, um die Tragstruktur (7) an das in dem Tub (3) befindliche Nest (2) heranzubewegen und das Haftelement (12) an die Anhaftfläche (14) des Nests (2) anzudrücken.

11. System (4) umfassend eine Vorrichtung (1) nach einem der Ansprüche 1 bis 10, wenigstens ein Nest (2) mit einer Anhaftfläche (14) und wenigstens ein Tub (3) zur Aufnahme des Nests (2).

12. System (4) nach Anspruch 11, **dadurch gekennzeichnet, dass** die Vorrichtung (1) mehrere, insbesondere längliche, Aufnahmeeinheiten (11) umfasst, die derart an der Tragstruktur (7) angeordnet sind, dass die an den Stirnflächen (13) der Aufnahmeeinheiten (11) angeordneten Haftelemente (12) gleichzeitig die Anhaftfläche (14) kontaktieren können, insbesondere wobei die Anhaftfläche (14) durch einen umlaufenden horizontal erstreckten Rand (15) des Nests (2) gebildet ist.

13. Sterilkammer, umfassend eine Vorrichtung (1) nach einem der Ansprüche 1 bis 10 oder ein System (4) nach Anspruch 11 oder 12.

14. Verfahren zur vakuumfreien Entnahme eines Nests (2) aus einem Tub (3), mit folgenden Schritten:
a. Bereitstellen einer Vorrichtung (1), die wenigstens eine, insbesondere rahmenförmig ausgebildete, Tragstruktur (7) und wenigstens eine, insbesondere längliche, Aufnahmeeinheit (11) umfasst, die an der Tragstruktur (7) angeordnet ist und sich von der Tragstruktur (7) wegerstreckt, wobei an einer von der Tragstruktur (7) abgewandten Stirnfläche (13) der Aufnahmeeinheit (11) wenigstens ein Haftelement (12) angeordnet ist, das zum adhäsiven Erfassen des Nests (2) haftstrukturiert ausgebildet ist, und wobei die Aufnahmeeinheit (11) federelastisch entlang ihrer Längsmittelachse verkürzbar ausgebildet ist,
b. Aneinanderdrücken des Haftelements (12) und einer Anhaftfläche (14) des Nests (2), so dass die Anhaftfläche (14) durch das Haftelement (12) adhäsiv erfasst wird,
c. Entnehmen des Nests (2) aus dem Tub (3),
d. Ablösen des Nests (2) von dem Haftelement (12).

15. Verfahren nach Anspruch 14, **dadurch gekennzeichnet, dass** das Nest (2) durch Überdrücken, durch eine Kippbewegung, durch eine Scherbewegung oder durch eine Drehbewegung von dem Haftelement (12) abgelöst wird.

## Claims

1. Device (1) for vacuum-free removal of a nest (2) from a tub (3), the device (1) comprising at least one, in particular frame-shaped, supporting structure (7) and at least one, in particular elongate, receiving unit (11) which is arranged on the supporting structure (7) and extends away from the supporting structure (7), **characterized in that** at least one adhesive element (12) is arranged on an end face (13) of the receiving unit (11) that faces away from the supporting structure (7), **in that** the adhesive element (12) is designed with an adhesive structure for adhesive gripping of the nest (2), **and in that** the receiving unit (11) is designed to be elastically shortenable along its longitudinal central axis.

2. Device (1) according to claim 1, **characterized in that** the adhesive element (12) comprises a plurality of elastically deformable adhesive protrusions, the diameter of the adhesive protrusions in particular being less than 1 mm, preferably less than 500 µm, particularly preferably less than 200 µm.

3. Device (1) according to either of claims 1 and 2, **characterized in that** the adhesive element (12) is an adhesive film (12).

4. Device (1) according to any of claims 1 to 3, **characterized in that** the receiving unit (11) is designed to be elastically shortenable along its longitudinal central axis via a spring mechanism (22), the spring mechanism (22) in particular comprising a spring travel limiter.

5. Device (1) according to any of claims 1 to 4, **characterized in that** the receiving unit (11) is detachably attached to the supporting structure (7), in particular by at least one fastening means.

6. Device (1) according to any of claims 1 to 5, **characterized in that** it comprises multiple, in particular elongate, receiving units (11) which are arranged distributed on the supporting structure (7) and extend away from the supporting structure (7) in the same direction, at least one adhesive element (12) being arranged on each of the end faces (13) of the receiving units (11) that face away from the supporting structure (7), in particular with the receiving units (11) being arranged in a peripheral direction of the frame-shaped supporting structure (7) in an in particular uniformly distributed manner.

7. Device (1) according to any of claims 1 to 6, **characterized in that** it comprises at least one, in particular pin-shaped, centering unit which is arranged on the supporting structure (7) and extends away from the supporting structure (7), with an end of the centering unit that faces away from the supporting structure (7) having a guide surface extending obliquely to the end face (13) for positioning the nest (2) relative to the supporting structure (7), in particular with the guide surface interacting with an outer contour of the nest (2), with a recess of the nest (2) or with a perforation of the nest (2) for positioning the nest (2).

8. Device (1) according to any of claims 1 to 7, **characterized in that** it comprises a sensor unit designed to recognize a nest (2) adhesively gripped by the adhesive element (12).

9. Device (1) according to any of claims 1 to 8, **characterized in that** it comprises a handling apparatus (16) designed to move the tub (3) with the nest (2) contained therein toward the receiving unit (12) and to press an adhesive surface (14) of the nest (2) against the adhesive element (12).

10. Device (1) according to any of claims 1 to 8, **characterized in that** it comprises a handling apparatus (16) designed to move the supporting structure (7) toward the nest (2) located in the tub (3) and to press the adhesive element (12) against the adhesive surface (14) of the nest (2).

11. System (4) comprising a device (1) according to any of claims 1 to 10, at least one nest (2) having an adhesive surface (14) and at least one tub (3) for receiving the nest (2).

12. System (4) according to claim 11, **characterized in that** the device (1) comprises multiple, in particular elongate, receiving units (11) which are arranged on the supporting structure (7) in such a way that the adhesive elements (12) arranged on the end faces (13) of the receiving units (11) can simultaneously contact the adhesive surface (14), the adhesive surface (14) in particular being formed by a peripheral horizontally extended edge (15) of the nest (2).

13. Sterile chamber comprising a device (1) according to any of claims 1 to 10 or a system (4) according to claim 11 or 12.

14. Method for vacuum-free removal of a nest (2) from a tub (3), comprising the following steps:
a. providing a device (1) comprising at least one, in particular frame-shaped, supporting structure (7) and at least one, in particular elongate, receiving unit (11) which is arranged on the supporting structure (7) and extends away from the supporting structure (7), wherein at least one adhesive element (12) is arranged on an end face (13) of the receiving unit (11) that faces away from the supporting structure (7), which adhesive element is designed with an adhesive structure for adhesive gripping of the nest (2), and wherein the receiving unit (11) is designed to be elastically shortenable along its longitudinal central axis,
b. pressing the adhesive element (12) and an adhesive surface (14) of the nest (2) together, so that the adhesive surface (14) is adhesively gripped by the adhesive element (12),
c. removing the nest (2) from the tub (3),
d. detaching the nest (2) from the adhesive element (12).

15. Method according to claim 14, **characterized in that** the nest (2) is detached from the adhesive element (12) by over-pressing, by a tilting movement, by a shearing movement or by a rotational movement.

## Revendications

1. Dispositif (1) pour le prélèvement sans vide d'un nid (2) dans un tube (3), dans lequel le dispositif (1) comprend au moins une structure porteuse (7), en particulier conçue en forme de cadre, et au moins une unité de réception (11), en particulier allongée, qui est agencée sur la structure porteuse (7) et s'étend à partir de la structure porteuse (7), **caractérisé en ce que** sur une surface frontale (13) de l'unité de réception (11) opposée à la structure porteuse (7) est agencé au moins un élément adhésif (12), **en ce que** l'élément adhésif (12) est conçu avec une structure adhésive pour saisir le nid (2) par adhérence, **et en ce que** l'unité de réception (11) est conçue de manière à pouvoir être raccourcie élastiquement par ressort le long de son axe médian longitudinal.

2. Dispositif (1) selon la revendication 1, **caractérisé en ce que** l'élément adhésif (12) comprend une pluralité de saillies adhésives élastiquement déformables, en particulier dans lequel un diamètre des saillies adhésives est inférieur à 1 mm, de préférence inférieur à 500 µm, de manière particulièrement préférée inférieur à 200 µm.

3. Dispositif (1) selon l'une des revendications 1 et 2, **caractérisé en ce que** l'élément adhésif (12) est une feuille adhésive (12).

4. Dispositif (1) selon l'une des revendications 1 à 3, **caractérisé en ce que** l'unité de réception (11) est conçue de manière à pouvoir être raccourcie élastiquement par ressort le long de son axe médian longitudinal par l'intermédiaire d'un mécanisme à ressort (22), en particulier dans lequel le mécanisme à ressort (22) comprend une limitation de course de ressort.

5. Dispositif (1) selon l'une des revendications 1 à 4, **caractérisé en ce que** l'unité de réception (11) est fixée de manière amovible à la structure porteuse (7), en particulier par au moins un moyen de fixation.

6. Dispositif (1) selon l'une des revendications 1 à 5, **caractérisé en ce qu'il** comprend plusieurs unités de réception (11), en particulier allongées, qui sont agencées réparties sur la structure porteuse (7) et s'étendent dans la même direction à partir de la structure porteuse (7), dans lequel au moins un élément adhésif (12) est respectivement agencé sur les surfaces frontales (13) des unités de réception (11) opposées à la structure porteuse (7), en particulier dans lequel les unités de réception (11) sont agencées réparties en particulier uniformément dans la direction circonférentielle de la structure porteuse (7) conçue en forme de cadre.

7. Dispositif (1) selon l'une des revendications 1 à 6, **caractérisé en ce qu'il** comprend au moins une unité de centrage, en particulier conçue en forme de broche, qui est agencée sur la structure porteuse (7) et s'étend à partir de la structure porteuse (7), dans lequel une extrémité de l'unité de centrage opposée à la structure porteuse (7) présente, pour le positionnement du nid (2) par rapport à la structure porteuse (7), une surface de guidage s'étendant obliquement par rapport à la surface frontale (13), en particulier dans lequel la surface de guidage coopère, pour le positionnement du nid (2), avec un contour externe du nid (2), avec un évidement du nid (2) ou avec un passage traversant du nid (2).

8. Dispositif (1) selon l'une des revendications 1 à 7, **caractérisé en ce qu'il** comprend une unité de capteur qui est conçue pour reconnaître un nid (2) saisi par adhérence par l'élément adhésif (12).

9. Dispositif (1) selon l'une des revendications 1 à 8, **caractérisé en ce qu'il** comprend un dispositif de manipulation (16) qui est conçu pour rapprocher le tube (3) avec le nid (2) se trouvant dedans de l'unité de réception (12) et pour presser une surface d'adhérence (14) du nid (2) contre l'élément adhésif (12).

10. Dispositif (1) selon l'une des revendications 1 à 8, **caractérisé en ce qu'il** comprend un dispositif de manipulation (16) qui est conçu pour rapprocher la structure porteuse (7) du nid (2) se trouvant dans le tube (3) et pour presser l'élément adhésif (12) contre la surface d'adhérence (14) du nid (2).

11. Système (4) comprenant un dispositif (1) selon l'une des revendications 1 à 10, au moins un nid (2) avec une surface d'adhérence (14) et au moins un tube (3) pour recevoir le nid (2).

12. Système (4) selon la revendication 11, **caractérisé en ce que** le dispositif (1) comprend plusieurs unités de réception (11), en particulier allongées, qui sont agencées sur la structure porteuse (7) de telle sorte que les éléments adhésifs (12) agencés sur les surfaces frontales (13) des unités de réception (11) peuvent entrer simultanément en contact avec la surface d'adhérence (14), en particulier dans lequel la surface d'adhérence (14) est formée par un bord circonférentiel (15) du nid (2) qui s'étend horizontalement.

13. Chambre stérile, comprenant un dispositif (1) selon l'une des revendications 1 à 10 ou un système (4) selon la revendication 11 ou 12.

14. Procédé de prélèvement sans vide d'un nid (2) à partir d'un tube (3), comportant les étapes suivantes :
a. préparation d'un dispositif (1) qui comprend au moins une structure porteuse (7), en particulier conçue en forme de cadre, et au moins une unité de réception (11), en particulier allongée, qui est agencée sur la structure porteuse (7) et s'étend à partir de la structure porteuse (7), dans lequel au moins un élément adhésif (12) est agencé sur une surface frontale (13) de l'unité de réception (11) opposée à la structure porteuse (7), lequel est conçu avec une structure adhésive pour saisir le nid (2) par adhérence, et dans lequel l'unité de réception (11) est conçue de manière à pouvoir être raccourcie élastiquement par ressort le long de son axe médian longitudinal,
b. pressage de l'élément adhésif (12) et d'une surface d'adhérence (14) du nid (2) l'un contre l'autre, de sorte que la surface d'adhérence (14) est saisie par adhérence par l'élément adhésif (12),
c. retrait du nid (2) à partir du tube (3),
d. détachement du nid (2) de l'élément adhésif (12).

15. Procédé selon la revendication 14, **caractérisé en ce que** le nid (2) est détaché de l'élément adhésif (12) par surpression, par un mouvement de basculement, par un mouvement de cisaillement ou par un mouvement de rotation.
